**Europäisches Patentamt**

**European Patent Office**

**Office européen des brevets**

(11) Veröffentlichungsnummer: **0 024 537**
**B1**

(12) **EUROPÄISCHE PATENTSCHRIFT**

(45) Veröffentlichungstag der Patentschrift:
**15.02.84**

(21) Anmeldenummer: **80104222.7**

(22) Anmeldetag: **18.07.80**

(51) Int. Cl.³: **F 16 B 2/02**, B 02 C 17/22,
B 65 G 11/16, B 65 G 27/06,
B 65 D 90/04

(54) **Klemmleiste zur Befestigung von Schutzauskleidungen.**

(30) Priorität: **31.08.79 DE 2935163**

(43) Veröffentlichungstag der Anmeldung:
**11.03.81 Patentblatt 81/10**

(45) Bekanntmachung des Hinweises auf die Patenterteilung:
**15.02.84 Patentblatt 84/7**

(84) Benannte Vertragsstaaten:
**AT CH FR GB IT LI NL SE**

(56) Entgegenhaltungen:
**DE - A - 1 944 990**
**DE - A - 2 609 045**
**DE - B - 1 249 058**
**DE - B - 2 010 630**

(73) Patentinhaber: **STAHLGRUBER Otto Gruber GmbH & Co., Einsteinstrasse 130, D-8000 München 80 (DE)**

(72) Erfinder: **Gottauf, Georg, Elektrastrasse 56, D-8000 München 81 (DE)**
Erfinder: **Felden, Alois, Burgauerstrasse 45, D-8000 München 81 (DE)**

(74) Vertreter: **Huss, Carl-Hans, Dipl.-Ing. et al, Rathausstrasse 14, D-8100 Garmisch-Partenkirchen (DE)**

Klemmleiste zur Befestigung von Schutzauskleidungen

Stand der Technik: Schutzauskleidungen für Wandteile von hohem Verschleiss ausgesetzten Behältern in der Zerkleinerungs- und Fördertechnik, z.B. für Schwing- und Vibrationsförderer, Bunker oder für Kugel- und Stabmühlen, die aus Platten aus elastischem Werkstoff bestehen, welche durch Leisten mit den zu schützenden Wänden verbunden werden, sind in grosser Zahl bekannt. Bei Drehrohrmühlen sind diese Klemmleisten dann gleichzeitig sog. Hubleisten, die die meist kugel- oder walzenförmigen Mahlkörper bei der Drehung der Mahltrommel so weit mitnehmen, bis sie durch die Schwerkraft in den Mahlraum zurückfallen. Es ist ebenso bekannt, dass die Hubleisten ein in ihren elastischen Werkstoff eingebettetes, zum Wandteil hin offenes Befestigungsprofil aufweisen, in das Kopfteile von Halteschrauben eingreifen, die sich an quer zur Längsrichtung erstreckenden, parallelen Flanschteilen dieses Befestigungsprofils abstützen.

Eine derartige Schutzauskleidung ist z.B. durch die DE-B-1 249 058 bekannt, bei der die elastischen Klemm- und/oder Hubleisten an der Anlagefläche ein metallenes, einseitig offenes Befestigungsprofil mit parallelen, nach innen gerichteten, zueinander weisenden Flanschteilen aufweisen, in das Halteschrauben bzw. deren Köpfe eingreifen und deren Basis sich über die gesamte Leistenbreite erstreckt. Damit drückt die Klemm- oder Hubleiste auf an der Unterfläche der Auskleidungsplatten befestigte, seitlich überstehende Metallflansche und hält diese. Diese Befestigungsart ist an der Auflageseite der Schutzplatten unelastisch, wodurch die elastische Aufnahme der Verformungskräfte erschwert wird. Ausserdem besteht die Gefahr des Lösens der Gummi-Metall-Verbindung.

Weiterhin ist durch die DE-B-2 010 630 eine Schutzauskleidung der vorbeschriebenen Art bekanntgeworden, bei der das in den Klemm- bzw. Hubleisten eingebettete Befestigungsprofil rinnenförmige Flanschteile aufweist, in die von den Halteschrauben gehaltene Anpressteile eingreifen. Bei dieser Art des Kontaktes zwischen der Unterfläche der Anpressteile und den Rinnen der Innenflanschteile entstehen wegen der mehr oder minder punkt- bzw. linienförmigen Berührung verhältnismässig hohe spezifische Drücke, die bei grösseren Objekten Werte erreichen, durch die die Flansche aufgebogen bzw. die Schraubenköpfe durchgezogen oder Schienen unzulässig durchgebogen werden.

Die DE-A-1 944 990 zeigt und beschreibt eine Auskleidung für Sieb- oder Mahlvorrichtungen, bei der das Hohlprofil nicht in die Klemm- oder Hubleisten eingebettet, sondern an der Unterseite einer an ihrer entgegengesetzten Oberfläche mit der Hubleiste verbundenen, metallenen Halteleiste befestigt ist, die gekrümmt oder abgewinkelt ausgebildet sein kann.

Schliesslich befasst sich die DE-A-2 609 045 mit der Innenauskleidung einer Mahltrommel mit zur Mitnahme des Mahlgutes bestimmten, dort «Flügel» genannten Klemm- und Hubleisten aus Gummi. Zu den Befestigungsorganen gehören schmale Metallbügel, die in entsprechend schmale, quer zur Längsrichtung der Leisten verlaufende, trommelseitig offene Ausnehmungen in den Gummileisten eingesetzt werden. Sowohl die Klemmleisten wie die Metallbügel weisen in Längsrichtung der Leisten verlaufende Löcher oder Bohrungen auf, die miteinander fluchten müssen. Zwei oder mehr der Metallflügel sind durch eine in der Längsrichtung der Leisten verlaufende Metallschiene verbunden, die durch Schrauben gegen die Trommelwand angezogen werden können. Durch die Löcher bzw. Bohrungen der Hubleisten und der in sie eingeschobenen Metallflügel werden, bevor die Schienen festgeschraubt werden, Stangen von einer Leistenstirnfläche aus eingeschoben. Diese Stangen werden dann von den Metallflügeln gehalten und halten selbst die Gummileisten, d.h. es besteht weder eine feste Verbindung zwischen den Stangen und den Metallflügeln noch zwischen den Metallflügeln und den Klemmleisten. Bei den Kräften, die im Mahlbetrieb auftreten können, ist diese Art der Verbindung ungeeignet. Die Klemmleisten können sich, ohne durch die Metallflügel hieran gehindert werden zu können, von den Stangen losreissen, und die schmalen Flügel schneiden desto mehr in die unter ihnen liegenden Flansche benachbarter Auskleidungsplatten ein, je mehr die Befestigungsschrauben notwendigerweise angezogen werden.

Keine dieser vorbekannten Ausführungsformen konnte sich in der Praxis und insbesondere dann bewähren, wenn die Schutzauskleidungen grösseren Belastungen ausgesetzt sind und die Befestigung an der zu schützenden Wand mit grosser Kraft vorgenommen werden muss, wie das z.B. bei Kugel- oder Stabrohrmühlen der Fall ist. In einem solchen Falle ist nicht nur das hohe Eigengewicht der Schutzauskleidung, sondern auch das der Mahlkugeln, -stäbe, -walzen und dgl. und das des Mahlgutes zu berücksichtigen, das zunächst bei der Drehung über eine gewisse Strecke angehoben werden muss und dann auf die darunterliegende Auskleidung einschliesslich der Klemm- und Hubleisten mit grosser Wucht fällt und durch das grosse Gewicht erhebliche Stösse verursacht. Für einen solchen Einsatz scheiden Klemm- und Hubleistenkonstruktionen aus, bei denen das Befestigungsprofil nicht eingebettet, sondern nur an seiner Unterseite befestigt ist (DE-B-1 249 058, DE-A-1 944 990). Den enormen Belastungen hält dann die Verbindung Metall-Gummi nicht stand, und das Profil wird in verhältnismässig kurzer Zeit abgelöst.

Ebenso scheiden die Lösungsvorschläge aus, bei denen die Anpressung an die zu schützende Wand auf eine verhältnismässig kleine Fläche übertragen wird, d.h. ein hoher spezifischer Druck entsteht, denn dieser führt nach den Erfahrungen der Praxis, gleich ob z.B. nach der DE-B-2 010 630 die Anpressteile in Rinnen der Flanschteile eingreifen oder nicht, zu Ausbiegungen des Profils und häufig sogar dazu, dass die Befestigungsschrauben ganz aus dem Profil herausgezogen werden bzw. dass, wenn diese Bestandteile einer Schiene sind, zu grosse Durchbiegungen derselben entstehen. Noch weniger sind Verbindungen den hohen Beanspruchungen der Praxis gewachsen, wenn die zu den Klemm- und/oder Hubleisten aus Gummi gehörenden Metallteile, an denen die Verbindungsschrauben direkt oder über Zwischenschienen angreifen, nicht einmal mit diesen Leisten selbst z.B. durch Vulkanisieren oder Kleben verbunden sind (DE-A-2 609 045).

Ausserdem ist aber auch zu beachten, dass die eine Auskleidung haltenden Klemm- und Hubleisten einfach und dabei korrigierbar anzubringen sein müssen. Bei offenen und in den Abmessungen nicht zu grossen Auskleidungsgegenständen, z.B. Schurren, Schwingförderern und dgl., ist das nicht schwierig, aber bei Trommelmühlen z.B. müssen in den Räumen, die nicht sehr hoch, aber dafür häufig sehr lang sind, die schweren Schutzplatten und Klemmleisten, die zusammen mehrere Tonnen wiegen können, gehandhabt werden können, und zwar so, dass die Schrauben in die jeweils zugeordneten Hubleisten eingeschoben und diese in die Löcher der auszukleidenden Wand hineingehen. Längere Schienen mit einer Mehrzahl von an ihnen angebrachten Gewindebolzen sind sehr schwierig zu handhaben und setzen voraus, dass der Abstand der Bolzen an den Schienen und der Lochabstand in der Wandung genau übereinstimmen.

Aufgabe

Der Erfindung lag die Aufgabe zugrunde, Klemm- und Hubleisten aus elastischem Material für eine verschleissfeste, elastische Wandauskleidung zu schaffen, die am Montageort, insbesondere hinsichtlich der Beweglichkeit und Anpassungsfähigkeit ihrer Befestigungselemente, leicht verlegt werden können und die auch im harten Dauerbetrieb und bei hohen auf die Schrauben einwirkenden Kräften keine Verformung der Befestigungsteile erleiden.

Diese Aufgabe löst die Erfindung nach der Lehre der Patentansprüche.

Vorteile

Die nach der Erfindung in idealer Weise eine an sich bekannte Einbettung eines Halteprofils aus Metall in einer aus elastischem Werkstoff bestehenden Klemm- und Hubleiste mit den beweglichen Halteelementen in der Weise kombiniert ist, dass der auf die Schrauben ausgeübte Anpressdruck sich auf eine grössere Fläche verteilt, wird der das Profil beanspruchende, spezifische Druck vermindert und damit bei hohen Anpressdrücken ein Ausbiegen der Flanschteile des Profils vermieden. Trotz dieses Vorteils aber bleiben die den spezifischen Druck vermindernden Teile noch so handlich, dass man sie bei der Montage der die Klemm- und Hubleisten benutzenden Schutzauskleidungen ohne grosse Mühe und ohne, dass sie das Gewicht unnötig erhöhen, handhaben, z.B. hin und her schieben kann. Dies wiederum hat zur Folge, dass sich Teilungsfehler bei der Befestigung der Schrauben an Befestigungsschienen oder etwa Teilungsfehler bei der Bohrung der Löcher in der zu schützenden Wandung nicht auswirken können. Selbstverständlich sind auch die Schienenstücke nach der Erfindung einfacher in die Befestiungsprofile einzuschieben als Schienen, die sich über die gesamte Länge oder einen wesentlichen Teil der Leisten erstrecken.

Erläuterung der Erfindung

Mit 1 ist eine zu schützende Wandung, z.B. die einer Stab- oder Kugelmühle, bezeichnet, deren dem Mahlraum 2 zugekehrte Seite mit Schutzplatten 3 aus abriebfestem Gummi ausgekleidet ist. Gehalten werden die Schutzplatten 3 durch Klemm- und Hubleisten 4, die also die Funktion des Festklemmens der Platten 3 übernehmen und vermöge ihres Überstandes über die Oberflächen der Platten 3 gleichzeitig dazu dienen, die Mahlkörper und das Mahlgut bei der Drehung der Mahltrommel eine Strecke anzuheben und nach einer gewissen Wegstrecke auf das restliche, im Mahlraum befindliche Mahlgut abzuwerfen. Falls die Leisten 4 nur Klemmleisten sein sollen, kann man sie mit den Platten 3 oberflächig bündig verlaufen lassen.

In die Klemm- und Hubleisten 4 sind allgemein mit 5 bezeichnete Befestiungsprofile eingebettet, die aus einem in Richtung auf die Wandung 1 offenen, U förmigen Profil 6 bestehen, auf das ein beidseitig überstehender und damit Verankerungsflansche 7 bildender Quersteg 8 aufgepunktet ist.

Die Klemm- und Hubleisten werden zur Klemmung der Platten 3 in Richtung auf die Wandung 1 durch Schrauben 9 gepresst, deren Köpfe 10 sich auf Schienenstücke 11 abstützen. Für jede Schraube ist ein Schienenstück 11 vorgesehen, das etwa die drei- bis vierfache Länge eines Schraubenkopfdurchmessers – z.B. 100 mm – aufweisen kann. Der Schraubenkopf kann, muss aber nicht, mit der Schiene fest verbunden sein. Im letzteren Fall genügt es, wenn auf der Oberfläche der Schiene 11 eine Verdrehungssicherung, z.B. in Form einer Eindrückung 12 oder dgl., angebracht ist.

Die Innenflansche 13 des Profils 6 sind im Winkel zur Horizontalen aufwärts und die Seitenflächen 14 der Schiene 11 entsprechend abwärts gebogen. Dies wirkt einer das Herausziehen der Schrauben einleitenden Ausbiegung der Flansche 13 nach unten entgegen. Im besonderen Fall, d.h. wenn mit extrem hohen Anpressdrücken zu rechnen ist, kann zwischen die Wandung 1 und die Flansche 13 eine Büchse 15 gesteckt sein.

Bezugszeichenaufstellung
1 zu schützende Wandung
2 Mahlraum
3 Schutzplatten
4 Hubleisten
5 Befestigungsprofil (allgemein)

6 U·förmiges Profil
7 Verankerungsflansche
8 Quersteg
9 Schraube
10 Schraubenkopf
11 Schienenstück
12 Eindrückung
13 Innenflansche (v. 6)
14 Seitenflächen (v. 11)
15 Büchse

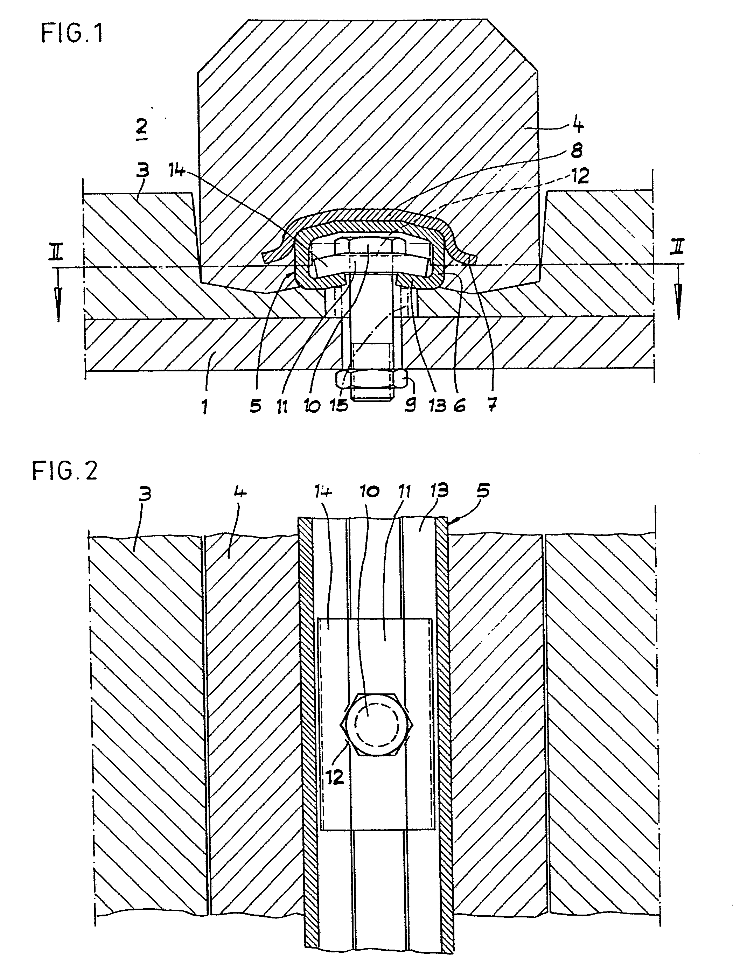

**Patentansprüche**

1. Klemmleiste zur Befestigung von Schutzauskleidungen an Wandteilen, bestehend aus elastischem Werkstoff mit einem eingebetteten, U-förmigen, zur zu schützenden Wand offenen Befestigungsprofil (5) aus Metall mit Innenflanschen (13), auf denen sich Befestigungsschrauben (9) aufnehmende Zwischenschienen (11) abstützen, dadurch gekennzeichnet, dass in Kombination
a) jeder Befestigungsschraube (9) ein Schienenstück (11) einer Länge des etwa drei- bis vierfachen Schraubenkopfdurchmessers zugeordnet ist,
b) die Flanschteile (13) eines Befestigungsprofils (5) in Richtung auf den Schraubenkopf (10) im Winkel zur Horizontalen aufwärts gebogen sind,
c) die Seitenteile (14) der Schienenstücke (11) entsprechend den Flanschteilen (13) abwärts gebogen sind.

2. Klemmleiste nach dem Anspruch 1, dadurch gekennzeichnet, dass an der der Anlage des Schraubenkopfes (10) bestimmten Fläche des Schienenstückes (11) eine Verdrehungssicherung für den Schraubenkopf vorgesehen ist.

3. Klemmleiste nach dem Anspruch 1, gekennzeichnet durch eine einen Teil des Schaftes der Schraube (9) aufnehmenden Buchse (15) einer dem Abstand zwischen der Unterfläche der Flanschteile (13) und der Oberfläche der zu schützenden Wandung (1) entsprechenden Höhe.

**Claims**

1. A clamping assembly for securing protective linings to wall parts, consisting of resiliently deformable material with an U-shaped attachment means (5) open only towards the wall to be protected, consisting of metal, with inwardly directed flanges (13), engaged by railpieces (11) receiving retaining bolts (9), characterized, by the combination
a) every retaining bolt (9) is attached to a railpiece (11) of a length about three to four times the bolthead diameter,
b) the flanges (13) of an attachment means (5) are bent upwardly towards the bolthead (10) at an angle to the horizontal level,
c) the sides (14) of the railpieces (11) are bent downwardly corresponding with the flanges (13).

2. A clamping assembly according to claim 1, characterized in that the surface of the railpiece (11), destined for the contact with the bolthead (10) is provided with means preventing rotation of the latter.

3. A clamping assembly according to claim 1, characterized by a bushing (15), receiving a part of the shank of the bolt (9), and of a height corresponding to the distance between the undersurface of the flanges (13) and the surface of the wall (1) to be protected.

**Revendications**

1. Barrette de serrage pour la fixation de revêtements de protection sur des parois, réalisée en matériau élastique et comportant un profilé de fixation (5) en métal, encastré et en forme d'U ouvert du côté de la paroi à protéger et muni de semelles internes (13) sur lesquelles prennent appui des barreaux intermédiaires (11) recevant des vis de fixation (9), caractérisées par le fait que, en combinaison
a) à chaque vis de fixation (9) est associé un tronçon de barreau (11) d'une longueur correspondant à environ trois à quatre fois le diamètre de la tête de la vis,
b) les semelles (13) d'un profilé de fixation (5) sont coudées vers le haut en direction de la tête (10) de la vis en formant un angle par rapport à l'horizontale,
c) les parties latérales (14) des tronçons de barreaux (11) sont coudées vers le bas de façon correspondante aux semelles (13).

2. Barrette de serrage selon la revendication 1, caractérisée par le fait que sur la surface du tronçon de barreau (11) destinée à recevoir la tête de vis (10) est prévu un système de blocage en rotation pour la tête de la vis.

3. Barrette de serrage selon la revendication 1, caractérisée par une douille (15) recevant une partie de la tige de la vis (9) et d'une hauteur correspondant à la distance entre la surface inférieure des semelles (13) et la surface de la paroi (1) à protéger.

FIG.1

FIG.2